(19) Europäisches Patentamt
European Patent Office
Office européen des brevets

(11) **EP 1 327 570 B1**

(12) **FASCICULE DE BREVET EUROPEEN**

(45) Date de publication et mention
de la délivrance du brevet:
**26.03.2008 Bulletin 2008/13**

(51) Int Cl.:
***B62D 13/04*** *(2006.01)*

(21) Numéro de dépôt: **03000072.3**

(22) Date de dépôt: **08.01.2003**

(54) **Procédé pour placer les roues d'une remorque dans le sillage des roues d'un engin tracteur et dispositif pour la mise en oeuvre de ce procédé**

Verfahren zur spurgetreuen Nachführung eines Anhängers und Vorrichtung zur Durchführung des Verfahrens

Method for placing the wheels of a trailer in the wheeltracks left by a tractor vehicle, and device for implementing this method

(84) Etats contractants désignés:
**AT BE BG CH CY CZ DE DK EE ES FI FR GB GR HU IE IT LI LU MC NL PT SE SI SK TR**

(30) Priorité: **10.01.2002 FR 0200340**

(43) Date de publication de la demande:
**16.07.2003 Bulletin 2003/29**

(73) Titulaire: **KUHN S.A.**
**67700 Saverne (FR)**

(72) Inventeurs:
• **Guesdon, Alain**
**77123 Noisy sur Ecole (FR)**

• **Le Bars, Jean-Michel**
**89100 Paron (FR)**

(74) Mandataire: **Andres, Jean-Claude et al**
**KUHN S.A.,**
**4, Impasse des Fabriques,**
**BP 60**
**67706 Saverne Cedex (FR)**

(56) Documents cités:
• **PATENT ABSTRACTS OF JAPAN vol. 018, no. 128 (C-1174), 2 mars 1994 (1994-03-02) -& JP 05 316807 A (SEIBUTSUKEI TOKUTEI SANGYO GIJUTSU KENKYU SUISHIN KIKO), 3 décembre 1993 (1993-12-03)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention se rapporte à un procédé pour placer les roues d'une remorque dans le sillage des roues d'un engin tracteur, ladite remorque comportant un moyen destiné à détecter la trajectoire empruntée par ledit engin tracteur, des éléments de direction destinés à modifier la trajectoire de ladite remorque, un moyen pour déterminer l'orientation adéquate à donner auxdits éléments de direction, et un actionneur destiné à agir sur lesdits éléments de direction.

Lors de l'utilisation d'un pulvérisateur agricole de type traîné, il est souhaitable que les roues dudit pulvérisateur roulent exactement dans les traces laissées par les roues de l'engin tracteur. La quantité de végétaux écrasée par le passage d'un tel attelage est ainsi réduite au strict minimum.

Si cette disposition des roues du pulvérisateur dans les traces laissées par les roues de l'engin tracteur est facilement réalisable lorsque l'attelage se déplace en ligne droite, il n'en va cependant plus de même lorsque l'attelage décrit une courbe. En effet, les roues d'un pulvérisateur traîné classique ont naturellement tendance à couper le virage décrit par l'engin tracteur.

Pour atténuer ce phénomène, il est connu dans l'état de la technique d'équiper les pulvérisateurs traînés avec un dispositif directeur.

En effet, le document EP 1 088 743 décrit une remorque de pulvérisation agricole attelée à un engin tracteur, ladite remorque étant munie de roues orientables. Lesdites roues orientables sont liées entre-elles de manière à réaliser un essieu directeur destiné à modifier la trajectoire de ladite remorque. Ledit essieu directeur est actionné par un vérin. Pour déterminer l'orientation à donner auxdites roues orientables, cette remorque connue comporte également une came, un coulisseau et deux capteurs de position. Ladite came, montée pivotante sur ladite remorque, est reliée par un câble audit engin tracteur. Ainsi chaque changement de direction dudit engin tracteur engendre, via ledit câble, un pivotement de ladite came. A son tour le pivotement de ladite came entraîne un déplacement dudit coulisseau le long d'une barre dudit essieu directeur. Lesdits capteurs de position sont destinés à informer un calculateur électronique des déplacements dudit coulisseau. Etant ainsi informé de l'orientation à donner auxdites roues orientables, ledit calculateur électronique pilote en conséquence un distributeur alimentant ledit vérin.

Cette remorque connue se place certes mieux que les remorques classiques dans le sillage dudit engin tracteur. Néanmoins, celle-ci comporte des inconvénients.

En effet avec la remorque du document EP 1 088 743, l'actionnement dudit vérin est interdit pendant une période de temps prédéterminée. Cette période de temps débute au moment où ledit engin tracteur commence à tourner par rapport à ladite remorque. L'actionnement dudit vérin est autorisé uniquement lorsque les roues de ladite remorque ont atteint la position qu'avaient les roues arrières dudit engin tracteur lorsque ce dernier a commencé à tourner par rapport à ladite remorque. Sur le tronçon parcouru pendant ladite période de temps prédéterminée, cette remorque connue se comporte donc comme une remorque classique. Par conséquent au moins sur ledit tronçon, les roues de cette remorque connue ont tendance à sortir des traces laissées par les roues de l'engin tracteur. Cet écart entre la trajectoire de ladite remorque et la trajectoire dudit engin tracteur se rencontre en entrée comme en sortie de virage. De plus, cet écart de trajectoire peut devenir important lors de virages à faible rayon de courbure.

En outre à la fin de ladite période de temps prédéterminée, ledit vérin est actionné de manière à orienter les roues de ladite remorque en fonction de la dernière position occupée par ledit coulisseau. Ainsi dans le cas où deux changements de direction se produiraient sur une période de temps inférieure à ladite période de temps prédéterminée, seul le deuxième changement de direction est pris en compte. Par conséquent au moins sur le tronçon correspondant au premier changement de direction, les roues de cette remorque connue ont tendance à sortir des traces laissées par les roues de l'engin tracteur. Une telle situation peut se rencontrer lors d'un enchaînement de virages relativement rapprochés, comme par exemple un virage en « S ».

Pour sa part, le document EP 1 081 020 décrit une remorque agricole attelée à un engin tracteur au moyen d'un timon. Ledit timon est lié au châssis de ladite remorque au moyen d'une articulation d'axe dirigé vers le haut. Il est également prévu un vérin afin de pivoter ledit timon autour de ladite articulation. Ledit timon constitue ainsi un timon directeur destiné à modifier la trajectoire de ladite remorque. Cette remorque connue comporte en sus un microprocesseur relié à divers capteurs. Parmi ces capteurs, il est notamment prévu un gyroscope pour déterminer le rayon de courbure de la trajectoire suivie par ledit engin tracteur. En fonction dudit rayon de courbure, ledit microprocesseur calcule une valeur cible correspondant à l'orientation que devrait avoir ledit timon directeur pour placer les roues de ladite remorque dans le sillage des roues arrières dudit engin tracteur. Pour maintenir les roues de ladite remorque dans le sillage des roues dudit engin tracteur également lors des phases d'entrée et de sortie de virage, ledit microprocesseur définit en sus, au moyen d'une loi de transition, la manière d'amener ledit timon directeur dans la position définie par ladite valeur cible. Finalement le vérin dudit timon directeur est piloté suivant ladite loi de transition.

Cette remorque connue se place également mieux que les remorques classiques dans le sillage dudit engin tracteur. Néanmoins, celle-ci comporte aussi des inconvénients.

En effet, le microprocesseur découpe le parcours effectué par ledit engin tracteur en tronçons successifs. La longueur de chaque tronçon correspond à la distance séparant les roues arrières dudit engin tracteur et l'essieu de ladite remorque. Pour chaque tronçon, ledit microprocesseur calcule une valeur cible et une loi de transition correspondante. Ladite loi de transition est calculée de manière à ce que, à la fin dudit tronçon, ledit timon directeur soit orienté suivant ladite valeur cible. De ce fait pour calculer ladite valeur cible, le microprocesseur prend en compte le rayon de courbure mesuré au début du tronçon. De plus pour calculer la loi de transition, ledit microprocesseur considère que le parcours effectué par ledit engin tracteur a un rayon de courbure constant sur tout ledit tronçon. Par conséquent dans le cas où deux changements de direction se produiraient sur un même tronçon, cette fois-ci seul le premier changement de direction est pris en compte. Ainsi comme pour le document EP 1 088 743, la remorque du document EP 1 081 020 n'est pas en mesure de prendre en compte deux changements de direction rapprochés.

En outre, le procédé décrit dans le document EP 1 081 020 pour déterminer la loi de transition est relativement complexe à mettre en oeuvre. En effet, chaque loi de transition nécessite au préalable le calcul de nombreux coefficients. De tels calculs devant être effectués rapidement, ce procédé de pilotage requiert un microprocesseur relativement puissant.

Le document JP 05 316807 divulgue une méthode pour commander des roues directrices d'une remorque de manière à ce que cette dernière se positionne idéalement derrière son engin tracteur. La remorque étant une presse destinée à ramasser un andain de fourrage. Cette méthode connue consiste dans un premier temps à mesurer la valeur Phi d'un angle entre l'engin tracteur et la presse, et à mesurer la valeur Téta d'un angle d'orientation des roues directrices de ladite ramasseuse-presse. Dans un deuxième temps, une valeur Phi prime correspondant à une vitesse angulaire est calculée à partir de la valeur Phi mesurée. Puis une valeur cible Téta t est déterminée au moyen d'une formule mathématique tenant compte des valeurs Phi et Phi prime. Finalement si la valeur Téta de l'angle d'orientation des roues directrices diffère de la valeur cible Téta t calculé, les roues directrices sont orientées en conséquence au moyen d'un vérin hydraulique.

Cette méthode connue prévoit éventuellement le stockage d'une valeur précédente de l'angle Phi de manière à pouvoir calculer ladite vitesse angulaire Phi prime. Le stockage d'une seule valeur ne peut pas constituer l'établissement d'un historique.

Les dispositifs directeurs de l'art antérieur sont donc incapables de prendre en compte deux changements de direction rapprochés dudit engin tracteur. De plus les dispositifs directeurs connus ne gèrent pas d'une manière simple et adéquate les phases d'entrée et de sortie de virages.

Le but de la présente invention est de remédier à ces inconvénients de l'état de la technique.

A cet effet, le procédé selon la présente invention est caractérisé par le fait qu'il comporte les étapes suivantes :

- on établit l'historique d'un paramètre représentatif de la trajectoire dudit engin tracteur de manière à pouvoir retrouver la valeur qu'avait ledit paramètre à un instant donné ;
- on détermine l'instant pertinent à consulter dans ledit historique ;
- on utilise la valeur qu'avait ledit paramètre audit instant pertinent pour orienter lesdits éléments de direction.

Ainsi avec le procédé selon la présente invention, tous les changements de direction, même rapprochés, dudit engin tracteur sont pris en compte.

Selon une autre caractéristique de la présente invention, la valeur utilisée pour orienter lesdits éléments de direction correspond avantageusement à la valeur qu'avait ledit paramètre lorsque des roues arrières dudit engin tracteur occupaient la position actuelle des roues de ladite remorque.

Selon une autre caractéristique de la présente invention et d'une manière particulièrement avantageuse, pour orienter lesdits éléments de direction en sus de ladite valeur passée on utilise également la valeur actuelle dudit paramètre. Ladite remorque réagit ainsi immédiatement à tout changement de direction dudit engin tracteur. Lors des phases d'entrée et des phases de sortie de virage, les roues de ladite remorque restent ainsi disposées dans les traces des roues dudit engin tracteur.

La présente invention concerne également un dispositif pour la mise en oeuvre de ce procédé, ledit dispositif comportant un capteur destiné à détecter la trajectoire suivie par un engin tracteur, un actionneur destiné à agir sur des éléments de direction d'une remorque, et un moyen pour commander ledit actionneur. Ledit dispositif est caractérisé par le fait qu'il comporte en sus un circuit électronique comportant plusieurs cases mémoires destinées à mémoriser l'évolution dans le temps d'un paramètre représentatif de la trajectoire dudit engin tracteur.

La présente invention concerne encore un attelage composé d'un engin tracteur et d'une remorque munie d'un dispositif tel que décrit ci-dessus.

D'autres caractéristiques de l'invention, à considérer séparément ou dans toutes leurs combinaisons possibles, apparaîtront encore dans la description suivante d'exemples de réalisation non limitatifs de l'invention représentés sur les dessins annexés sur lesquels :

- la **figure 1** représente de manière schématique un exemple d'attelage conforme à la présente invention,

- les **figures 2, 3, 4, et 5** représentent de manière schématique le contenu des cases mémoires d'un circuit électronique à différents instants T.

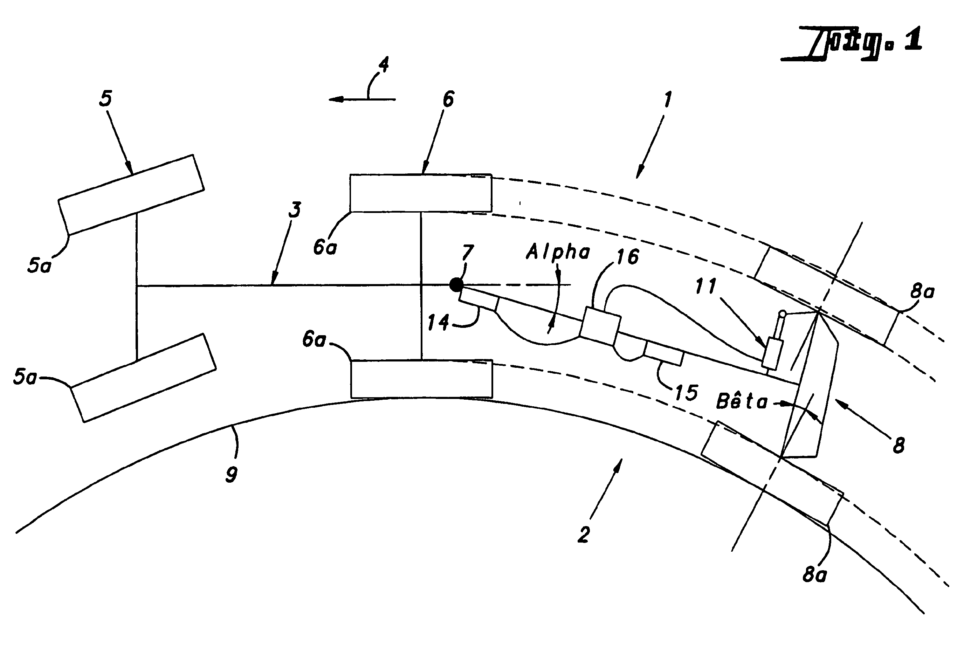

La figure 1 représente, en vue de dessus et de manière schématique, un attelage (1) se déplaçant suivant une courbe (9). Ledit attelage (1) se compose d'une remorque (2) et d'un engin tracteur (3). Ledit engin tracteur (3) tire ladite remorque (2) suivant une direction et un sens d'avance indiqué par la flèche (4). Dans la suite de la description, les notions suivantes "avant" et "arrière", "devant" et "derrière" sont définies par rapport au sens d'avance et les notions "droite" et "gauche" sont définies en regardant ledit attelage (1) de l'arrière dans le sens d'avance (4).

D'une manière générale, ledit engin tracteur (3) comporte un essieu avant (5) et un essieu arrière (6). Les roues (5a) dudit essieu avant (5) sont avantageusement directrices. Pour sa part, ladite remorque (2) comporte un essieu (8) muni de roues (8a). De plus, ladite remorque (2) est liée à l'arrière dudit engin tracteur (3) en un point d'attelage (7).

La figure 1 représente plus précisément un exemple d'attelage (1) où ladite remorque (2) comporte un dispositif directeur conforme à la présente invention. Ainsi les roues (8a) de ladite remorque (2) roulent avantageusement dans les traces (représentées en pointillés) laissées par les roues (6a) de l'essieu arrière (6) dudit engin tracteur (3).

Pour ce faire et à la lumière de la figure 1, ledit dispositif directeur comporte des éléments de direction destinés à modifier la trajectoire de ladite remorque (2). Lesdits éléments de direction sont avantageusement réalisés au moyen d'un essieu directeur (8). Les roues (8a) de ladite remorque (2) peuvent ainsi pivoter d'un angle (Bêta) autour d'un axe respectif dirigé vers le haut. Un tel essieu directeur (8) étant connu par l'homme de l'art, il ne sera donc pas décrit d'avantage.

Ledit dispositif directeur comporte également un moyen destiné à détecter la trajectoire empruntée par ledit engin tracteur (3). Dans l'exemple de réalisation représenté sur la figure 1, ledit moyen se compose d'un capteur d'angle (14) et d'un capteur de vitesse (15). Ledit capteur d'angle (14), disposé au niveau dudit point d'attelage (7), mesure un angle (Alpha) entre un axe longitudinal dudit engin tracteur (3) et un axe longitudinal de ladite remorque (2). Pour sa part, ledit capteur de vitesse (15) détermine la vitesse d'avance V dudit attelage (1). Un tel capteur de vitesse (15) est réalisé par exemple au moyen d'un radar lié à ladite remorque (2).

Ledit dispositif directeur comporte finalement un moyen pour déterminer l'orientation adéquate à donner auxdites roues (8a) et manoeuvrer ces dernières en conséquence. Dans l'exemple de réalisation représenté sur la figure 1, ce moyen est réalisé à l'aide d'un microprocesseur (16) pilotant un vérin (11). Ledit vérin (11) est avantageusement disposé de manière à agir sur l'orientation desdites roues (8a).

Selon la présente invention, pour placer les roues (8a) de ladite remorque (2) dans les traces laissées par les roues (6a) dudit engin tracteur (3), on procède de la manière suivante.

On établit l'historique d'un paramètre représentatif de la trajectoire dudit engin tracteur (3). De ce fait, on pourra retrouver la valeur qu'avait ledit paramètre à un instant donné. Puis, on détermine l'instant pertinent à consulter dans ledit historique. Finalement, on utilise la valeur qu'avait ledit paramètre audit instant pertinent pour orienter lesdits éléments de direction.

D'une manière préférentielle, la valeur utilisée pour orienter lesdits éléments de direction correspond à la valeur qu'avait ledit paramètre lorsque les roues arrières (6a) dudit engin tracteur (3) occupaient la position actuelle des roues (8a) de ladite remorque (2).

D'une manière particulièrement avantageuse pour orienter lesdits éléments de direction, en sus de ladite valeur passée, on utilise également la valeur actuelle dudit paramètre. Ladite remorque (2) réagit donc immédiatement à tout changement de direction dudit engin tracteur (3). Lors des phases d'entrée et des phases de sortie de virage, les roues (8a) de ladite remorque (2) restent ainsi disposées dans les traces des roues (6a) dudit engin tracteur (3).

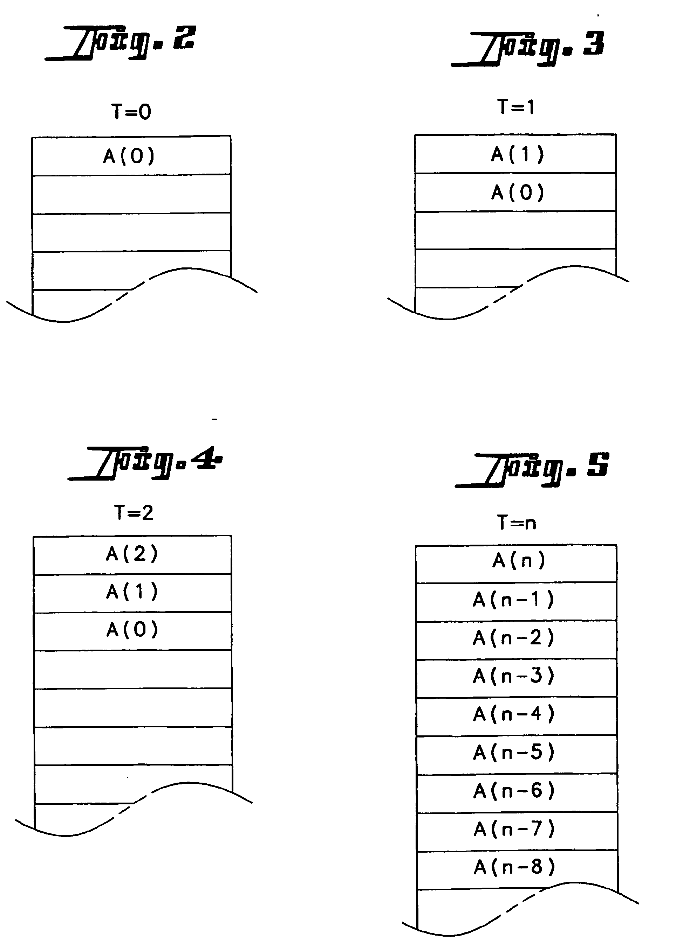

Dans l'exemple de réalisation représenté sur les figures, pour mettre en oeuvre ce procédé ledit dispositif de direction comporte en sus un circuit électronique muni de plusieurs cases mémoires. Ledit circuit électronique est destiné à mémoriser l'historique d'un paramètre représentatif de la trajectoire dudit engin tracteur (3). Ledit angle (Alpha) constitue par exemple un tel paramètre représentatif. A la lumière des figures 2 à 5, ledit circuit électronique peut être représenté de manière symbolique sous la forme d'un tableau à une colonne. Chaque case dudit tableau correspond à une desdites cases mémoires. D'une manière préférentielle, ledit circuit électronique est intégré audit microprocesseur (16).

Dans l'exemple de réalisation représenté sur les figures, la mise en oeuvre du procédé selon la présente invention s'effectue de la manière suivante.

A intervalle de temps régulier, ledit microprocesseur (16) alimente ledit circuit électronique avec la valeur A de l'angle (Alpha) fournie par ledit capteur d'angle (14). Ainsi d'une manière plus précise et à la lumière de la figure 2, à un instant T=0 ledit microprocesseur (16) inscrit dans la première case mémoire la valeur actuelle A{0} dudit angle (Alpha). Puis à un instant T=1, la valeur A{0} initialement inscrite dans la première case mémoire est avantageusement transmise à la deuxième case mémoire. De plus, ledit microprocesseur (16) inscrit dans ladite première case mémoire ainsi libérée la valeur actuelle A{1} dudit angle (Alpha). L'état dudit circuit électronique à l'instant T=1 a été représenté sur la figure 3. Ensuite à un instant T=2 et à la lumière de la figure 4, les valeurs A{0} et A {1} sont avantageusement décalées respectivement d'une case mémoire. Ledit microprocesseur (16) inscrit dans ladite première case mémoire à nouveau libérée la valeur actuelle A{2} dudit angle (Alpha). A l'instant T=2, les trois premières cases mémoires dudit circuit électronique comportent donc dans l'ordre les valeurs A{2}, A{1}, et A{0}. En généralisant et à la lumière de la figure 5, à l'instant T=n les cases mémoires dudit circuit électronique comportent respectivement les valeurs A{n}, A{n-1}, A{n-2}, A{n-3}, etc.

D'une manière préférentielle, l'intervalle de temps séparant deux instants successifs T est largement inférieur au temps pouvant séparer deux changements de direction dudit engin tracteur (3). De ce fait, tous les changements de direction dudit engin tracteur (3), même les plus rapprochés qu'il soit, sont pris en compte par ledit dispositif directeur.

A titre d'exemple pour un attelage (1) composé d'un tracteur agricole et d'un pulvérisateur tracté, un intervalle de temps de l'ordre du dixième de seconde permet d'obtenir de bon résultat. De ce fait si la valeur A{n} correspond à la valeur actuelle dudit angle (Alpha), la valeur A{n-1} correspond alors à la valeur qu'avait ledit angle (Alpha) il y a 0.1 seconde. Pour sa part, la valeur A{n-2} correspond alors à la valeur qu'avait ledit angle (Alpha) 0.2 seconde auparavant. Il en va de même pour toutes les valeurs contenues dans lesdites cases mémoires.

Pour déterminer l'instant pertinent à consulter dans l'historique ainsi établi, ledit microprocesseur (16) calcul une consigne de retard R dépendant de ladite vitesse d'avance V dudit attelage (1). Ladite consigne de retard R correspond avantageusement au temps mis par ledit attelage (1) pour parcourir une distance équivalente à la distance séparant l'essieu (8) de ladite remorque (2) de l'essieu arrière (6) dudit engin tracteur (3). Ledit instant pertinent à consulter correspond à l'instant présent retardé de ladite consigne de retard R.

A titre d'exemple pour un attelage (1) se déplaçant à 2.5 m/s (soit 9 Km/H) et dont ladite distance séparant l'essieu (8) de ladite remorque (2) de l'essieu arrière (6) dudit engin tracteur (3) est égale à 5 mètres, ladite consigne de retard R vaut 2 secondes. Ainsi avec ledit intervalle de temps de l'ordre du dixième de seconde, la valeur à utiliser pour orienter les roues (8a) de ladite remorque (2) est la valeur A{n-20}.

D'une manière préférentielle, ladite consigne de retard R est réactualisée au même rythme que ledit circuit électronique. Ainsi à l'instant T=n, ledit microprocesseur (16) calcule une consigne de retard R{n} dépendant de la vitesse d'avance instantanée V{n} dudit attelage (1).

D'une manière également préférentielle, ladite consigne de retard R{n} est arrondie à un multiple entier de l'intervalle de temps utilisé pour établir ledit historique. De ce fait à l'instant T=n, la valeur à utiliser pour orienter les roues (8a) de ladite remorque (2) est la valeur A{n-R{n}}.

Pour déterminer l'orientation à donner aux roues (8a) de ladite remorque (2), ledit microprocesseur (16) calcule une valeur M en fonction de ladite valeur A{n-R{n} } et de ladite valeur A{n}. Ladite valeur M prend ainsi également en compte la valeur actuelle dudit angle (Alpha). De ce fait, ladite remorque (2) réagit immédiatement à tout changement de direction dudit engin tracteur (3). Lors des phases d'entrée et des phases de sortie de virage, les roues (8a) de ladite remorque (2) restent par conséquent disposées dans les traces des roues (6a) dudit engin tracteur (3).

D'une manière préférentielle, ladite valeur M est également réactualisée suivant le même intervalle de temps que ledit circuit électronique. Ainsi à l'instant T=n, ledit microprocesseur (16) calcul une valeur M {n}.

D'une manière également préférentielle, ladite valeur M{n} est une moyenne pondérée des valeurs A{n} et A {n-R{n}}, c'est à dire :

$$M\{n\} = C \times A\{n\} + (1 - C) \times A\{n - R\{n\}\}$$

Le coefficient de pondération C est avantageusement réglable afin de pouvoir, si nécessaire, adapter ledit dispositif directeur audit attelage (1). La valeur antérieure A{n-R{n}} étant prépondérante pour le calcul de M{n}, ledit coefficient de pondération C est de préférence compris entre 1% et 49%.

La valeur de l'angle (Bêta) à donner aux roues (8a) de ladite remorque (2) est finalement déterminée à partir de ladite valeur M{n} et au moyen d'une table de conversion. Ledit microprocesseur (16) pilote ensuite ledit vérin (11) pour orienter lesdites roues (8a) en conséquence.

Le dispositif directeur ainsi décrit permet par conséquent d'ajuster, à chaque dixième de seconde, l'orientation des roues (8a) de ladite remorque (2) en fonction de l'évolution de la trajectoire dudit engin tracteur (3).

Ledit procédé et ledit dispositif directeur de la présente invention s'appliquent notamment aux pulvérisateurs agricoles.

L'attelage (1) qui vient d'être décrit, n'est qu'un exemple de réalisation et d'utilisation qui ne sauraient en aucun cas limiter le domaine de protection défini par les revendications suivantes.

**Revendications**

1.  Procédé pour placer les roues (8a) d'une remorque (2) dans le sillage des roues arrières (6a) d'un engin tracteur (3), ladite remorque (2) comportant un moyen destiné à détecter la trajectoire empruntée par ledit engin tracteur (3), des éléments de direction destinés à modifier la trajectoire de ladite remorque (2), un moyen pour déterminer l'orientation adéquate à donner auxdits éléments de direction, et un actionneur destiné à agir sur lesdits éléments de direction, procédé *caractérisé en ce qu'*il comprend les étapes suivantes :

    - on établit l'historique d'un paramètre représentatif de la trajectoire dudit engin tracteur (3) de manière à pouvoir retrouver la valeur qu'avait ledit paramètre à un instant donné ;
    - on détermine l'instant pertinent à consulter dans ledit historique ;
    - on utilise la valeur qu'avait ledit paramètre audit instant pertinent pour orienter lesdits éléments de direction.

2.  Procédé selon la revendication 1, *caractérisé par le fait que* ladite valeur utilisée pour orienter lesdits éléments de direction correspond à la valeur qu'avait ledit paramètre lorsque les roues arrières (6a) dudit engin tracteur (3) occupaient l'emplacement actuel des roues (8a) de ladite remorque (2).

3.  Procédé selon la revendication 2, *caractérisé par le fait que* pour orienter lesdits éléments de direction, en sus de ladite valeur qu'avait ledit paramètre lorsque les roues arrières (6a) dudit engin tracteur (3) occupaient l'emplacement actuel des roues (8a) de ladite remorque (2), on tient également compte de la valeur actuelle dudit paramètre.

4.  Dispositif pour la mise en oeuvre du procédé selon l'une quelconques des revendications 1 à 3, ledit dispositif comportant un moyen destiné à détecter la trajectoire empruntée par un engin tracteur (3), des éléments de direction destinés à modifier la trajectoire d'une remorque (2), un moyen pour déterminer l'orientation adéquate à donner auxdits éléments de direction, et un actionneur destiné à agir sur lesdits éléments de direction, *caractérisé par le fait que* ledit dispositif comporte en sus un circuit électronique destiné à mémoriser l'historique d'un paramètre représentatif de la trajectoire dudit engin tracteur (3).

5.  Dispositif selon la revendication 4, *caractérisé par le fait que* ledit circuit électronique est réactualisé à intervalle de temps régulier, ledit intervalle de temps étant de l'ordre du dixième de seconde.

6.  Dispositif selon la revendication 4 ou 5, *caractérisé par le fait que* ledit dispositif comporte un moyen pour calculer une consigne de retard R dépendant de la vitesse d'avance V dudit engin tracteur (3).

7.  Dispositif selon la revendication 6, *caractérisé par le fait que* la valeur de ladite consigne de retard R correspond au temps mis par ledit engin tracteur (3) pour parcourir une distance équivalente à la distance séparant un essieu (8) de ladite remorque (2) d'un essieu arrière (6) dudit engin tracteur (3).

8.  Dispositif selon la revendication 6 ou 7, *caractérisé par le fait que* ladite consigne de retard R est réactualisée à intervalle de temps régulier, ledit intervalle de temps étant de l'ordre du dixième de seconde.

9.  Dispositif selon l'une quelconque des revendications 4 à 8, *caractérisé par le fait que* ledit dispositif comporte en sus un moyen pour calculer une moyenne pondérée M entre une valeur actuelle et une valeur antérieure dudit paramètre représentatif de la trajectoire dudit engin tracteur (3), ladite valeur actuelle étant affectée d'un coefficient de pondération C et ladite valeur antérieure étant affectée d'un coefficient de pondération (1-C).

10. Dispositif selon la revendication 9, *caractérisé par le fait que* ledit coefficient de pondération C est réglable.

11. Dispositif selon la revendication 9 ou 10, *caractérisé par le fait que* ledit coefficient de pondération C est compris entre 0.01 et 0.49.

12. Dispositif selon l'une quelconque des revendications 9 à 11, *caractérisé par le fait que* ladite moyenne pondérée M est réactualisée à intervalle de temps régulier, ledit intervalle de temps étant de l'ordre du dixième de seconde.

13. Dispositif selon l'une quelconque des revendications 4 à 12, *caractérisé par le fait que* ladite remorque (2) est un pulvérisateur agricole.

**Claims**

1. Method for placing the wheels (8a) of a trailer (2) in the trail of the rear wheels (6a) of a tractor vehicle (3), the said trailer (2) comprising a means intended to detect the path taken by the said tractor vehicle (3), steering elements intended to alter the path of the said trailer (2), a means for determining the appropriate orientation to be given to the said steering elements, and an actuator intended to act on the said steering elements, which method is *characterized in* **that** it comprises the following steps:

   - the history of a parameter representative of the path of the said tractor vehicle (3) is established so as to be able to find again a value that the said parameter had at a given moment;
   - the relevant moment to be consulted in the said history is determined;
   - the value that the said parameter had at the said relevant moment is used to orientate the said steering elements.

2. Method as claimed in claim 1, *characterized in* **that** the said value used for orientating the said steering elements corresponds to the value that the said parameter had when the rear wheels (6a) of the said tractor vehicle (3) occupied the position now occupied by the wheels (8a) of the said trailer (2).

3. Method as claimed in claim 2, *characterized in* **that** in order to orientate the said steering elements, consideration is also given to the current value of the said parameter in addition to the said value that the said parameter had when the rear wheels (6a) of the said tractor vehicle (3) occupied the position now occupied by the wheels (8a) of the said trailer (2).

4. Device for implementing the method as claimed in any one of claims 1 to 3, *characterized in* **that** the said device comprising a means intended to detect the path taken by a tractor vehicle (3), steering elements intended to alter the path of a trailer (2), a means for determining the appropriate orientation to be given to the said steering elements, and an actuator intended to act on the said steering elements, *characterized in* **that** the said device additionally comprises an electronic circuit intended to store the history of a parameter representative of the path of the said tractor vehicle (3).

5. Device as claimed in claim 4, *characterized in* **that** the said electronic circuit is updated at regular time intervals, the said time interval being of an order of one tenth of a second.

6. Device as claimed in claim 4 or 5, *characterized in* **that** the said device comprises a means for calculating a lag datum R depending on the speed of forward travel V of the said tractor vehicle (3).

7. Device as claimed in claim 6, *characterized in* **that** the value of the said lag datum R corresponds to the time taken by the said tractor vehicle (3) to cover a distance equivalent to the distance separating an axle (8) of the said trailer (2) from a rear axle (6) of the said tractor vehicle (3).

8. Device as claimed in claim 6 or 7, *characterized in* **that** the said lag datum R is updated at regular time intervals, the said time interval being of the order of one tenth of a second.

9. Device as claimed in any one of claims 4 to 8, *characterized in* **that** the said device additionally comprises a means for calculating a weighted mean M of a current value with an earlier value of the said parameter representative of the path of the said tractor vehicle (3), the said current value being allocated a weighting coefficient C and the said earlier value being allocated a weighting coefficient (1-C).

10. Device as claimed in claim 9, *characterized in* **that** the said weighting coefficient C is adjustable.

11. Device as claimed in claim 9 or 10, *characterized in* **that** the said weighting coefficient C is between 0.01 and 0.49.

12. Device as claimed in any one of claims 9 to 11, *characterized in* **that** the said weighted mean M is updated at regular time intervals, the said time interval being of the order of one tenth of a second.

13. Device as claimed in any one of claims 4 to 12, *characterized in* **that** the said trailer (2) is an agricultural sprayer.

**Patentansprüche**

1. Verfahren zur spurgetreuen Nachführung der Räder (8a) eines Anhängers (2) hinter den Hinterrädern (6a) einer Zugmaschine (3), wobei der Anhänger (2) ein Mittel, das dazu bestimmt ist, die von der Zugmaschine (3) eingeschlagene Bahn zu erfassen, Lenkelemente, die dazu bestimmt sind, die Bahn des Anhängers (2) zu verändern, ein Mittel, um die entsprechende den Lenkelementen zu verleihende Ausrichtung zu bestimmen, und ein Betätigungselement, das dazu bestimmt ist, auf die Lenkelemente einzuwirken, umfasst, wobei das Verfahren *dadurch gekennzeichnet* **ist, dass** es die folgenden Schritte umfasst:

   - Erstellung der zeitlichen Entwicklung eines für die Bahn der Zugmaschine (3) repräsentativen Parameters, um den Wert, den der Parameter zu einem gegebenen Zeitpunkt hatte, wieder zu finden;
   - Bestimmung des passenden Moments, der in der zeitliche Entwicklung zu konsultieren ist;
   - Verwendung des Werts, den der Parameter zu dem passenden Moment innehatte, um die Lenkelemente auszurichten.

2. Verfahren nach Anspruch 1, *dadurch gekennzeichnet,* **dass** der für die Ausrichtung der Lenkelemente verwendete Wert vorzugsweise dem Wert entspricht, den der Parameter innehatte, als die Hinterräder (6a) der Zugmaschine (3) die aktuelle Position der Räder (8a) des Anhängers (2) einnahmen.

3. Verfahren nach Anspruch 2, *dadurch gekennzeichnet,* **dass** zur Ausrichtung der Lenkelemente zusätzlich zu dem Wert, den der Parameter innehatte, als die Hinterräder (6a) der Zugmaschine (3) die aktuelle Position der Räder (8a) des Anhängers (2) einnahmen, auch der aktuelle Wert des Parameters berücksichtigt wird.

4. Vorrichtung für den Einsatz des Verfahrens nach irgend einem der Ansprüche 1 bis 3, wobei die Vorrichtung ein Mittel, das dazu bestimmt ist, die von einer Zugmaschine (3) verfolgte Bahn zu erfassen, Lenkelemente, die dazu bestimmt sind, die Bahn eines Anhängers (2) zu verändern, ein Mittel, um die entsprechende den Lenkelementen zu verleihende Ausrichtung zu bestimmen, und ein Betätigungselement umfasst, das dazu bestimmt ist, auf Lenkelemente einzuwirken, *dadurch gekennzeichnet,* **dass** die Vorrichtung zusätzlich einen Elektronikkreis umfasst, der dazu bestimmt ist, die zeitliche Entwicklung eines für die Bahn der Zugmaschine (3) repräsentativen Parameters zu speichern.

5. Vorrichtung nach Anspruch 4, *dadurch gekennzeichnet,* **dass** der Elektronikkreis in regelmäßigen Zeitabständen neu aktualisiert wird, wobei der Zeitabstand ungefähr eine Zehntelsekunde beträgt.

6. Vorrichtung nach Anspruch 4 oder 5, *dadurch gekennzeichnet,* **dass** die Vorrichtung ein Mittel umfasst, um einen Verzögerungssollwert R zu berechnen, der von der Vorschubgeschwindigkeit V der Zugmaschine (3) abhängt.

7. Vorrichtung nach Anspruch 6, *dadurch gekennzeichnet,* **dass** der Wert des Verzögerungssollwerts R der Zeit entspricht, die die Zugmaschine (3) benötigt, um eine Distanz zu durchlaufen, die mit dem Abstand zwischen einer Achse (8) des Anhängers (2) und einer Hinterachse (6) der Zugmaschine (3) gleichwertig ist.

8. Vorrichtung nach Anspruch 6 oder 7, *dadurch gekennzeichnet,* **dass** der Verzögerungssollwert R in regelmäßigen Zeitabständen neu aktualisiert wird, wobei der Zeitabstand ungefähr eine Zehntelsekunde beträgt.

9. Vorrichtung nach irgend einem der Ansprüche 4 bis 8, *dadurch gekennzeichnet,* **dass** die Vorrichtung zusätzlich ein Mittel umfasst, um einen gewichteten Durchschnitt M zwischen einem aktuellen Wert und einem vorherigen Wert des für die Bahn der Zugmaschine (3) repräsentativen Parameters zu berechnen, wobei der aktuelle Wert mit einem Gewichtungskoeffizienten C und der vorherige Wert mit einem Gewichtungskoeffizienten (1-C) beaufschlagt wird.

10. Vorrichtung nach Anspruch 9, *dadurch gekennzeichnet,* **dass** der Gewichtungskoeffizient C einstellbar ist.

11. Vorrichtung nach Anspruch 9 oder 10, *dadurch gekennzeichnet,* **dass** der Gewichtungskoeffizient C zwischen 0.01 und 0.49 liegt.

12. Vorrichtung nach irgend einem der Ansprüche 9 bis 11, *dadurch gekennzeichnet,* **dass** der gewichtete Durchschnitt M in regelmäßigen Zeitabständen neu aktualisiert wird, wobei der Zeitabstand ungefähr eine Zehntelsekunde beträgt.

13. Vorrichtung nach irgend einem der Ansprüche 4 bis 12, *dadurch gekennzeichnet,* **dass** der Anhänger (2) eine landwirtschaftliche Feldspritze ist.

*Fig. 1*

5
5a
4
6
6a
1
3
7
Alpha
16
11
8a
14
15
Bêta
8
5a
6a
9
2
8a

EP 1 327 570 B1

## Fig. 2

T=0

| A(0) |
| --- |
|  |
|  |
|  |
|  |

## Fig. 3

T=1

| A(1) |
| --- |
| A(0) |
|  |
|  |
|  |

## Fig. 4

T=2

| A(2) |
| --- |
| A(1) |
| A(0) |
|  |
|  |
|  |
|  |
|  |

## Fig. 5

T=n

| A(n) |
| --- |
| A(n-1) |
| A(n-2) |
| A(n-3) |
| A(n-4) |
| A(n-5) |
| A(n-6) |
| A(n-7) |
| A(n-8) |

**EP 1 327 570 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1088743 A
- EP 1081020 A
- JP 05316807 A